# EUROPEAN PATENT APPLICATION

(11) **EP 3 552 848 A1**
(43) Date of publication of application: **16.10.2019**
(21) Application number: 17878992.1
(22) Date of filing: 27.11.2017
(51) Int. Cl.: B60C 15/04, B29D 30/48, B60C 15/00

(54) **HEAVY DUTY TIRE AND METHOD FOR MANUFACTURING HEAVY DUTY TIRE**

(30) Priority: 08.12.2016 JP 2016238233
(71) Applicant: Bridgestone Corporation, Tokyo 104-8340 (JP)
(72) Inventor: SATO Akihito, Tokyo 104-8340 (JP)
(74) Representative: Oxley, Robin John George
(86) International application number: PCT/JP2017/042324
(87) International publication number: WO 2018/105419

(57) **Abstract**

A heavy load tire (1) includes a bead core (5) formed by a bead wire (8) wound plural times in a ring shape, and a rubber sheet (10) formed of a rubber material. The rubber sheet (10) is wound on a region including one end portion and another end portion of the bead wire (8). The one end portion is served as an end portion closest to the another end portion in a tire circumferential direction.

## Description

### [Technical Field]

The present invention relates to a heavy load tire and a method for manufacturing a heavy tire, in particular, a heavy load tire having superior separation resistance around a bead core and a method for manufacturing the heavy load tire.

### [Background Art]

In a bead core formed by a bead wire wound in a ring shape, a technique to suppress jumping of the bead wire is known. In the invention disclosed in Patent Literature 1, the jumping of the bead wire is suppressed by winding an organic fiber tape on an end portion of the bead wire.

### [Citation List]

### [Patent Literature]

[PTL 1] Japanese Unexamined Patent Application Publication No. 2016-088259

### [Summary of Invention]

### [Problems to be Solved by the Invention]

A use condition of a tire such as a heavy load tire used in a severe environment under a high speed and a heavy load might become further severe, and therefore high durability and high degradation resistance of the tire are required. Specifically, improvement of separation resistance around a bead core is expected.

Accordingly, an object of the present invention is, in consideration of the problem described above, to provide a heavy load tire capable of improving separation resistance around a bead core and a method for manufacturing the heavy load tire.

### [Means for Solving the Problems]

The inventors conducted a study and recognized that the separation resistance around the bead core has been improved by using a rubber sheet described below instead of a conventional organic fiber tape, so that the present invention was completed.

A heavy load tire according to a first aspect includes a bead core formed by a bead wire wound plural times in a ring shape, and a rubber sheet formed of a rubber material. The rubber sheet is wound on a region including one end portion and another end portion of the bead wire. The one end portion is served as an end portion closest to the another end portion in a tire circumferential direction.

In the first aspect, a tensile stress M50 at 50% elongation of the rubber sheet, which is measured based on JIS K6251 under a condition of a measurement temperature of 25 °C after vulcanization, is 1.0 MPa or more.

A method for manufacturing the heavy load tire according to the first aspect includes winding a rubber sheet formed of a rubber material on a region including one end portion and another end portion of the bead wire, and vulcanizing after winding the rubber sheet. The one end portion is served as an end portion closest to the another end portion in the tire circumferential direction.

### [Effects of the Invention]

According to the present invention, the separation resistance around the bead core in the heavy load tire is improved.

### [Brief Description of Drawings]

Fig. 1 is a schematic cross-sectional view taken along a tread width direction and orthogonal to a tire circumferential direction, illustrating a part of a section of a heavy load tire according to an embodiment of the present invention.
Fig. 2 is a perspective view illustrating a part of a bead core.
Fig. 3 is a flow chart illustrating a method for manufacturing the heavy load tire according to the embodiment of the present invention.
Fig. 4 is a graph illustrating a relationship between a crack area around the bead core and an angle from an end portion of a bead wire.

### [Description of Embodiments]

Hereinafter, an embodiment of the present invention will be described with reference to the drawings. The same reference signs are assigned to the same parts in the drawings and the description thereof is therefore omitted.

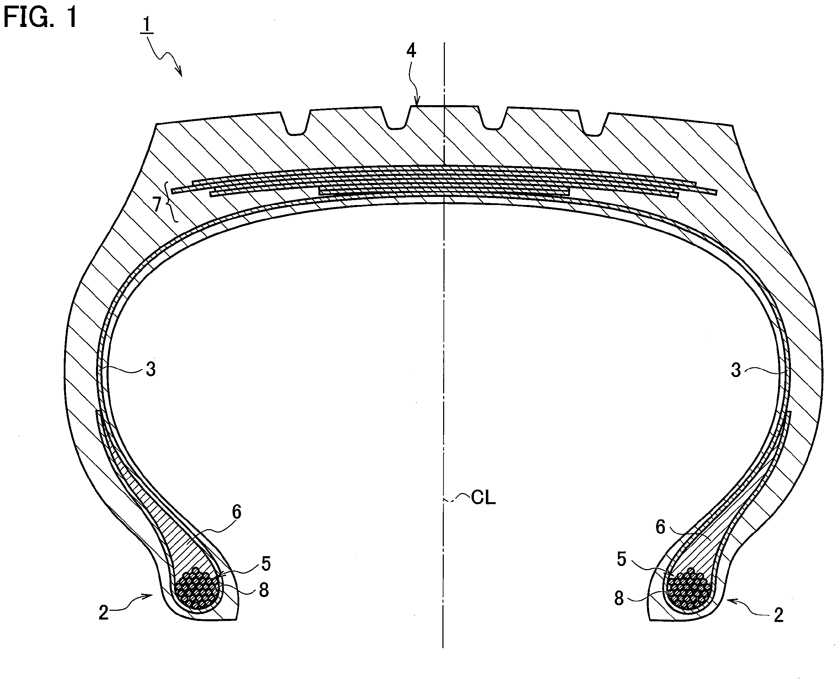

A configuration of a heavy load tire 1 according to the present embodiment is described with reference to Fig. 1. The heavy load tire 1 according to the present embodiment is adopted in a heavy load vehicle such as a construction vehicle.

As shown in Fig. 1, the heavy load tire 1 is provided with a pair of bead portions 2 contacted with a rim (not shown), a carcass layer 3 forming a frame of the heavy load tire 1, and a tread portion 4 having a ground contact surface contacted with a ground.

The bead portion 2 has a bead core 5 and a bead filler 6. The carcass layer 3 is extended between the bead cores 5 in a troidal manner.

At least two bead cores 5 are arranged to be separated to each other in a tread width direction. Further, the bead core 5 is formed by one bead wire 8 wound plural times in a ring shape. The bead core 5 is formed to support cord tension of the carcass layer 3 generated due to inner pressure of the heavy load tire 1. The bead wire 8 is coated with a rubber material.

The bead filler 6 is a rubber element for reinforcing the bead core 5. The bead filler 6 is arranged in a space formed by folding both end portions of the carcass layer 3 at positions corresponding to the bead cores 5, toward respective outer side in a tire width direction.

A belt layer 7 is arranged between the carcass layer 3 and the tread portion 4. A plurality of the belt layers 7 is extended along a tire circumferential direction so as to be laminated to each other.

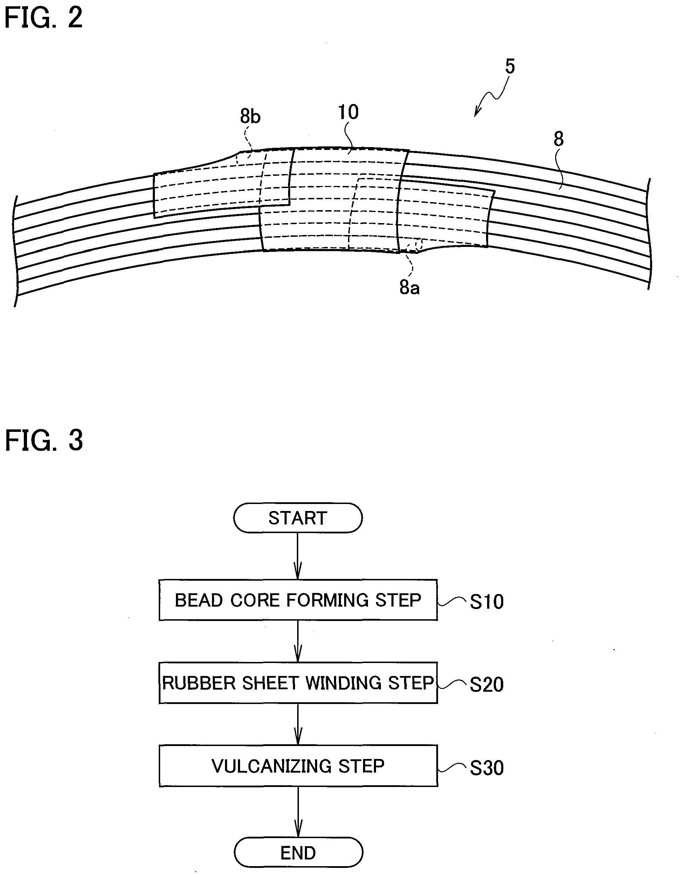

As shown in Fig. 2, a winding start end portion 8a and a winding finish end portion 8b of the bead wire 8 are wound to be overlapped in a radial direction of the bead core 5 (a radial direction of the heavy load tire 1). Further, as shown in Fig. 2, a rubber sheet 10 is wound on a region and a neighborhood region thereof where the winding start end portion 8a and the winding finish end portion 8b of the bead wire 8 are overlapped. The rubber sheet 10 is wound on a region including the winding start end portion 8a and the winding finish end portion 8b of the bead wire 8. In other words, the rubber sheet 10 is wound on a region including one end portion and another end portion of the bead wire 8. Further, the one end portion is served as an end portion closest to the another end portion in the tire circumferential direction. That is, the winding start end portion 8a is served as an end portion closest to the winding finish end portion 8b in the tire circumferential direction. The winding finish end portion 8b is served as an end portion closest to the winding start end portion 8a in the tire circumferential direction. As shown in Fig. 2, the number of the bead wires 8 in the region where the winding start end portion 8a and the winding finish end portion 8b of the bead wire 8 are overlapped is one more than that in other region. Hereinafter, the region where the winding start end portion 8a and the winding finish end portion 8b of the bead wire 8 are overlapped is called an end portion of the bead wire 8, in conjunction with the neighborhood region thereof.

The rubber sheet 10 used in the present embodiment is mainly formed of natural rubber, however it is not limited to this. A tensile stress M50 at 50% elongation of the rubber sheet 10, which is measured based on JIS K6251 under a condition of a measurement temperature of 25 °C after vulcanization, is 1.0 MPa or more. Here, the rubber sheet 10 used in the present embodiment has a width of 45 mm, a thickness of 1 mm, and a length of 400 mm, however the dimensions thereof is not limited to those.

As shown in Fig. 2, in the present embodiment, the rubber sheet 10 is wound three times on the end portion of the bead wire 8, however the number of the winding times of the rubber sheet 10 is not limited to three. In a case in which the rubber sheet 10 is wound three times, it is preferable that the rubber sheet 10 is wound such that the rubber sheet 10 is not laminated three times at the same position. In an example shown in Fig. 2, the rubber sheet 10 is wound in a spiral manner in a circumferential direction of the ring shape, however it is not limited to this. The winding manner is not especially limited as long as the rubber sheet 10 is wound on the winding start end portion 8a and the winding finish end portion 8b. For example, the rubber sheet 10 may be wound plural times on the same position. However, it is preferable that the rubber sheet 10 is wound such that the rubber sheet 10 is not laminated three times at the same position.

A method for manufacturing the heavy load tire 1 according to the present embodiment is described with reference to a flow chart shown in Fig. 3. As shown in Fig. 3, the method for manufacturing the heavy load tire 1 includes a bead core forming step S10, a rubber sheet winding step S20, and a vulcanizing step S30.

In the bead core forming step S10, one bead wire 8 is wound plural times in a ring shape so as to form the bead core 5.

In the rubber sheet winding step S20, the rubber sheet 10 is wound on the region including the winding start end portion 8a and the winding finish end portion 8b of the bead wire 8.

In the vulcanizing step S30, a green tire having the bead core 5 on which the rubber sheet 10 is wound is vulcanized so as to form the heavy load tire 1.

### Compared result

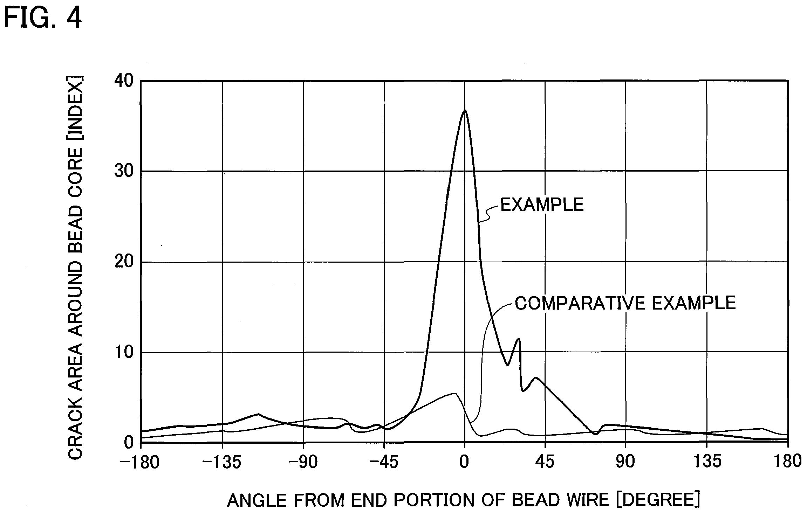

Next, a compared result is described with reference to Fig. 4. Specifically, the heavy load tire 1 (example) in which the rubber sheet 10 is wound on the end portion of the bead wire 8, and a heavy load tire (comparative example) in which a conventional organic fiber tape is wound on the end portion of the bead wire 8 were prepared, and a durability test thereof were performed. Thereafter, a crack area around the bead core 5 of each example was measured.

A horizontal axis in Fig. 4 denotes a position in the tire circumferential direction with respect to the end portion of the bead wire 8 defined as a reference (0 degree). Further, a vertical axis in Fig. 4 denotes a crack area (index) around the bead core 5. As a value in the vertical axis in Fig. 4 is small, the separation resistance is superior.

As shown in Fig. 4, the crack area is largely decreased in a configuration in which the rubber sheet 10 is wound on the end portion of the bead wire 8, compared to a configuration in which the conventional organic fiber tape is wound on the end portion of the bead wire 8. That is, by using the rubber sheet 10 instead of the organic fiber tape, the separation resistance around the bead core 5 is improved. The reason leading such a measurement result is that an adhesion property between the bead wire 8 coated with the rubber material and the rubber sheet 10 is more superior than an adhesion property between the bead wire 8 coated with the rubber material and the conventional organic fiber tape.

As described above, according to the present embodiment, the heavy load tire 1 includes the rubber sheet 10, and the rubber sheet 10 is wound on the region including the winding start end portion 8a and the winding finish end portion 8b of the bead wire 8. With this, the separation resistance around the bead core 5 in the heavy load tire 1 is improved, compared to the configuration in which the conventional organic fiber tape is wound.

The entire contents of Japanese Patent Application No. 2016-238233 (filed on December 08, 2016) are incorporated in the present specification by reference.

### [Reference Signs List]

- 1:: heavy load tire
- 2:: bead portion
- 3:: carcass layer
- 4:: tread portion
- 5:: bead core
- 6:: bead filler
- 7:: belt layer
- 8:: bead wire
- 8a:: winding start end portion
- 8b:: winding finish end portion
- 10:: rubber sheet

## Claims

1. A heavy load tire comprising:
a bead core formed by a bead wire wound plural times in a ring shape; and
a rubber sheet formed of a rubber material,
wherein:
the rubber sheet is wound on a region including one end portion and another end portion of the bead wire; and
the one end portion is served as an end portion closest to the another end portion in a tire circumferential direction.

2. The heavy load tire according to claim 1, wherein a tensile stress M50 at 50% elongation of the rubber sheet, which is measured based on JIS K6251 under a condition of a measurement temperature of 25 °C after vulcanization, is 1.0 MPa or more.

3. A method for manufacturing a heavy load tire, wherein the heavy load tire includes a bead core formed by a bead wire wound plural times in a ring shape, the method comprising:
winding a rubber sheet formed of a rubber material on a region including one end portion and another end portion of the bead wire; and
vulcanizing after winding the rubber sheet,
wherein the one end portion is served as an end portion closest to the another end portion in a tire circumferential direction.
